# EUROPÄISCHE PATENTSCHRIFT

(11) **EP 2 899 430 B1**
(45) Veröffentlichungstag und Bekanntmachung des Hinweises auf die Patenterteilung: **25.10.2017**
(21) Anmeldenummer: 14152297.9
(22) Anmeldetag: 23.01.2014
(51) Int. Cl.: F16H 55/06, F16H 55/14, F16H 55/17

(54) **Mehrkomponentenzahnrad**
Multiple component gear wheel
Roue dentée à plusieurs composants

(43) Veröffentlichungstag der Anmeldung: 29.07.2015
(73) Patentinhaber: IMS Gear SE & Co. KGaA, 78166 Donaueschingen (DE)
(72) Erfinder: Oberle, Stephan, 78050 Villingen-Schwenningen (DE); Bernhard, Markus, 78359 Nenzingen (DE); Seidel, Manuel, 78083 Dauchingen (DE); Kutscher, Christian, 78224 Singen (DE); Stoppel, Eugen, 78357 Mühlingen (DE)
(74) Vertreter: Westphal, Mussgnug & Partner Patentanwälte mbB

(56) Entgegenhaltungen:
- DE-A1- 3 109 153
- DE-A1- 10 127 224
- DE-A1-102012 102 777
- DE-U1- 20 022 502

## Beschreibung

Die Erfindung betrifft ein Mehrkomponentenzahnrad gemäß den Merkmalen des Oberbegriffs des Anspruchs 1.

Ein solches Mehrkomponentenzahnrad, wie es beispielsweise für elektrische Lenkungen von Kraftfahrzeugen verwendet wird, ist aus EP 1 777 439 B1 bekannt. Dieses Mehrkomponentenzahnrad besteht im Wesentlichen aus drei Komponenten. Den eigentlichen Zahnkranz bildet ein Außenteil, das aus Kunststoff besteht und zur Bildung des Zahnkranzes eine Vielzahl von Zähnen aufweist. Innenseitig weist das Zahnrad ein Einlageteil 3, das üblicherweise als Nabe oder Drehwelle ausgebildet ist, auf. Dieses Innenteil besteht dabei in der Regel aus Metall, vorzugsweise aus Stahl. Das Außenteil mit seinem Zahnkranz und das Innenteil sind über ein Verbindungsteil, welches durch Schirmguss hergestellt wird, formschlüssig miteinander in Verbindung. Das aus Kunststoff spritzgegossene Verbindungsteil verfügt an seinen beiden, gegenüberliegenden Hauptflächen, d. h. die zur Drehachse senkrecht liegenden äußeren ringförmigen Flächen über Verstärkungsrippen, die sich in radialer Richtung von dem gedachten Zentrum der Drehachse ausgehend vom Innenteil in Richtung Außenteil und damit zum Zahnkranz erstrecken. Zusätzlich verfügen die beiden Hauptflächen des Verbindungsteils über einen ringförmig verlaufenden Verstärkungsring zum Innenteil zugewandt und über einen weiteren Verstärkungsring zum Außenteil zugewandt. Die Verstärkungsrippen verlaufen radial zwischen diesen beiden Verstärkungsringen. Betrachtet man einen radialen Schnitt durch dieses Verbindungsteil zwischen den erwähnten Verstärkungsrippen, so zeigt sich eine H-förmige Querschnittskontur des umlaufenden Verbindungsteils. Verschiedene Ausführungsformen von Mehrkomponentenzahnrädern offenbart auch die gattungsgemässe DE 101 27 224 A1. Die dortige Figur 8 zeigt ebenfalls ein Mehrkomponentenzahnrad mit einer innen liegenden Metallnabe und einem Zahnkranz aus Kunststoff, wobei dieser Zahnkranz über eine Kunststoffscheibe mit an beiden Hauptflächen angeordneten Verstärkungsrippen mit der Metallnabe in Verbindung steht. Eine im Querschnitt H-förmig ausgebildetes Verbindungsteil aus Kunststoff zeigt auch die dortige Figur 10.

Zahnräder, die jedoch keine Mehrkomponentenzahnräder sind, offenbaren die DE 200 22 502 U1 und DE 31 09 153 A1. Ein weiteres Mehrkomponentenzahnrad zeigt dagegen noch die DE 10 2012 102 777 A1.

Es hat sich herausgestellt, dass solche Mehrkomponentenzahnräder verbesserungsbedürftig sind, insbesondere dann, wenn lediglich ein begrenzter Bauraum und insbesondere eine begrenzte Zahnradbreite zur Verfügung steht und trotzdem ein möglichst axial steifes Zahnrad bereitgestellt werden muss. Idealerweise würde ein sehr axial steifes Zahnrad durch einen Zahnradkörper aus Vollmaterial breitgestellt werden können. Dies scheitert jedoch bei der Verwendung von Kunststoff am Herstellungsprozess. Die Herstellung von dickwandigen Kunststoffkörpern hat nämlich das Problem der Lunkerbildung. Darunter versteht man beim Kunststoffspritzgießen das Auftreten von unerwünschten Hohlräumen im Inneren eines spritzgegossenen Werkstücks oder auch Einbeulungen an dessen Oberfläche. Je dickwandiger ein spritzgegossenes Werkstück ist, desto höher ist die Wahrscheinlichkeit des Auftretens von solchen Lunkern. Theoretisch wäre es zwar möglich, das Innenteil mit einem H-Querschnitt auszubilden. Für rotationssymmetrische Radkörper, wie Zahnräder, lässt sich ein solcher Querschnitt aber nicht umsetzen, da die entsprechenden Hohlräume nicht gespritzt werden können.

Die Erfindung hat das Ziel ein Mehrkomponentenzahnrad zur Verfügung zu stellen, das verhältnismäßig wenig Material verbraucht und sich trotzdem durch eine hohe axiale Steifigkeit auszeichnet.

Dieses Ziel wird durch die Merkmale des Anspruchs 1 erreicht. Weiterbildungen der Erfindung sind Gegenstand der Unteransprüche.

Die Vertiefungen auf den beiden Hauptflächen sind dabei so gewählt und zueinander versetzt angeordnet, dass diese in einer parallel zur Drehachse gesehenen Schnittansicht einen mäanderförmigen Verlauf der Wandung des Verbindungsteils ergeben.

Die Vertiefungen sind dabei vorzugsweise bezogen auf die Drehachse mindestens halb so dick bzw. breit wie das Zahnrad bzw. das Verbindungsteil und dabei topfförmig mit einem Boden ausgebildet.

Es liegt im Rahmen der vorliegenden Erfindung, dass das Außenteil aus Kunststoff, gegebenenfalls auch faserverstärkt, und das Innenteil aus Metall gebildet sind. Dabei kann das Innenteil als Nabe, insbesondere als Stahlnabe, oder auch als Drehwelle ausgebildet sein. Die übrigen Weiterbildungen der Erfindung werden anhand des nachfolgenden Ausführungsbeispieles im Zusammenhang mit den Figuren näher erläutert. Es zeigen:
- Figur 1: eine perspektivische Ansicht eines Ausführungsbeispieles eine Mehrkomponentenzahnrades nach der Erfindung mit Blick von schräg vorne auf eine erste Hauptfläche des Mehrkomponentenzahnrades,
- Figur 2: eine Schnittansicht durch das Mehrkomponentenzahnrad von Figur 1 entlang der Schnittlinie A-A von Figur 1,
- Figur 3: eine Schnittansicht entlang der Schnittlinie B-B des Mehrkomponentenzahnrades von Figur 1,
- Figur 4: eine Schnittansicht entlang der Schnittlinie C-C des Mehrkomponentenzahnrades von Figur 1,
- Figur 5: eine Draufsicht auf die erste Hauptfläche 46 des Mehrkomponentenzahnrades 10, und
- Figur 6: eine ähnliche perspektivische Ansicht des Mehrkomponentenzahnrades wie in Figur 1, wobei dieses jedoch entlang einer konzentrisch zur Drehachse liegenden Schnittes D-D teilweise aufgebrochen dargestellt ist.

In den nachfolgenden Figuren bezeichnen identische Bezugszeichen gleiche Teile und haben gleiche Bedeutung.

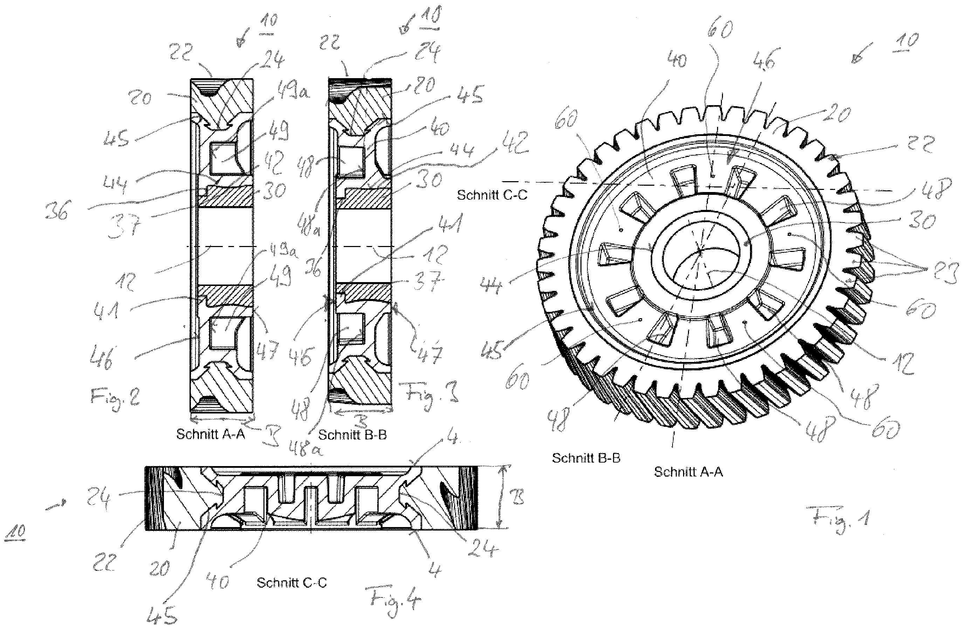

Figur 1 zeigt in perspektivischer Darstellung ein Ausführungsbeispiel eines Mehrkomponentenzahnrades 10, wie es beispielsweise als Schneckenrad für eine elektrische Lenkung bei einem Kraftfahrzeug Verwendung finden kann. Dieses Mehrkomponentenzahnrad 10 besteht aus mehreren Teilen, welche radial um eine Drehachse 12 rotationssymmetrisch angeordnet sind. Das Mehrkomponentenzahnrad 10 besteht aus einem Außenteil 20, welches an seiner äußeren Umfangsfläche 25 mit einer Vielzahl von Zähnen 23 zur Bildung eines Zahnkranzes 22 versehen ist. Das Außenteil 20 besteht vorzugsweise aus unverstärktem Kunststoff. Das Außenteil 20 verfügt über eine innere Umfangsfläche 24, welche im dargestellten Ausführungsbeispiel (vgl. hierzu die Schnittansichten in Figur 2, 3 und 4) einen nicht konstanten Durchmesser zur Drehachse 12 hat und deshalb im Schnitt gesehen gezahnt verläuft. Eine solche verzahnte oder ineinandergreifende Struktur verbessert das Aneinanderhaften von Außenteil 20 und dem nachfolgend noch erläuterten Verbindungsteil 40. An diese innere Umfangsfläche 24 schließt sich ein Verbindungsteil 40 an, welches eine formschlüssige Verbindung zwischen dem Außenteil 20 und einem innen liegenden Innenteil 30 realisiert.

Das Innenteil 30 kann, wie dargestellt, eine ringförmige Nabe, insbesondere eine metallische Nabe und vorzugsweise eine Stahlnabe sein. Im dargestellten Ausführungsbeispiel verfügt das ringförmige Innenteil 30 über eine innere Umfangsfläche 34, die beispielsweise auf eine Drehwelle aufgesetzt werden kann, sowie über eine äußere Umfangsfläche 35.

Obwohl in der Darstellung von Figur 1 eine ringförmige Nabe als Innenteil 30 dargestellt ist, ist es ebenso möglich, anstelle dieses ringförmigen Innenteils auch unmittelbar eine Drehwelle, insbesondere eine metallische Drehwelle als Innenteil 30 vorzusehen.

Eine formschlüssige Halterung des Außenteils 20 und des Innenteils 30 ist über das Verbindungsteil 40 dadurch gewährleistet, dass dieses als Spritzgussteil aus Kunststoff gestaltet ist. Zur Herstellung dieses Verbindungsteils 40 werden das Außenteil 20 und das Innenteil 30 in ein Spritzwerkzeug eingelegt und anschließend das Verbindungsteil 40 spritzgegossen, so dass es die in den Figuren 1 bis 4 gestaltete Form aufweist. Dabei kann das Innenteil 30 beim Spritzgießen durch einen sogenannten Punktanguss hergestellt werden. Zweckmäßigerweise sind dabei mehrere Anspritzpunkte, z. B. fünf Anspritzpunkte vorgesehen. Diese mehreren Anspritzpunkte sind zweckmäßigerweise rotationssymmetrisch im gleichen Winkel zueinander im Spritzwerkzeug platziert. In den Figuren sind die Anspritzpunkte mit dem Bezugszeichen 60 versehen.

Zur Erzielung eines möglichst axial steifen Radkörpers ist das Verbindungsteil 40 so ausgestaltet, dass möglichst viel Material an den beiden Hauptflächen 46, 47 zur Verfügung steht. Dies wird dadurch erreicht, dass jede der beiden Hauptflächen 46, 47 mit einer Vielzahl von taschenförmigen Vertiefungen 48, 49 versehen ist. Die erste Hauptfläche 46 des Verbindungsteils 40 ist in Figur 1 die dem Betrachter zugewandte ringförmige Fläche des Verbindungsteils 40, welche senkrecht zur Drehachse 12 steht. Die zweite Hauptfläche 47 des Verbindungsteils 40 ist in Figur 1 nicht zu sehen und dem Betrachter abgewandt. In die ringförmige erste Hauptfläche 46 sind gemäß Figur 1 mehrere vorliegend zehn taschenförmige Vertiefungen 48 eingearbeitet, wobei die Vertiefungen 48 jeweils einen Boden 48a aufweisen, die jeweils einen Wandungsabschnitt der gegenüberliegenden zweiten Hauptfläche 47 des Verbindungsteils 40 bilden. Die Vertiefungen 48 sind ringförmig zueinander angeordnet und jeweils um 36° zueinander versetzt. Diese Vertiefungen 48 sind, bezogen auf die Drehachse 12 mit einem gleichen radialen Abstand zueinander auf der ersten Hauptfläche 46 platziert. Wie dargestellt, verbreitern sich die Vertiefungen 48 in Richtung Außenteil 20 etwas.

Auf der zweiten Hauptfläche 47 des Verbindungsteils 40 sind ebenfalls zehn Vertiefungen 49 angeordnet. Diese sind ebenfalls topfförmig gestaltet und verfügen über einen Boden 49a, die jeweils einen Wandungsabschnitt der ersten Hauptfläche 46 des Verbindungsteils 40 bilden. Diese Vertiefungen 49 sind in Figur 1 strichliert angedeutet. Wie dargestellt, sind diese Vertiefungen 49 auf der zweiten Hauptfläche 47 des Verbindungsteils 40 so radial und in Umfangsrichtung zu den Vertiefungen 48 auf der ersten Hauptfläche 46 des Verbindungsteils 40 platziert, dass diese jeweils zwischen den Vertiefungen 48 liegen.

Diese Gestaltung gewährleistet ein axial steifes Verbindungsteil 40, bei dem möglichst viel Material des Verbindungsteils 40 an den Außenseiten, also an den Hauptflächen 46, 47 vorhanden ist. Besonders deutlich wird dies anhand der Schnittdarstellungen in Figur 2.

Figur 2 zeigt das Mehrkomponentenzahnrad 10 von Figur 1 in Schnittansicht entlang einer Schnittlinie A-A. Diese Schnittlinie verläuft zwischen zwei Vertiefungen 48 auf der ersten Hauptfläche 46 und schneidet zwei Vertiefungen 49 auf der zweiten Hauptfläche 47 des Verbindungsteils 40.

Figur 3 zeigt das Mehrkomponentenzahnrad 10 von Figur 1 in einem zum Schnitt A-A leicht radial versetzten Schnitt entlang der Schnittlinie B-B. Bei diesem Schnitt B-B werden zwei Vertiefungen 48 des Verbindungsteils 40 geschnitten. Diese Vertiefungen 48 sind in Figur 3 deutlich zu erkennen.

Figur 4 zeigt schließlich das Mehrkomponentenzahnrad 10 von Figur 10 entlang eines Schnittes C-C, welcher entlang einer Sekante genommen ist, die die beiden oberen Vertiefungen 48 auf der ersten Hauptfläche 46 des Verbindungsteils 40 schneidet. Bei diesem Schnitt C-C werden zugleich drei Vertiefungen 49 auf der zweiten Hauptfläche 47 geschnitten. Dabei ist deutlich zu erkennen, dass sich zwischen diesen insgesamt fünf Vertiefungen 48, 49 ein mäanderförmiger Verlauf der Wandungen des Verbindungsteils 40 ergibt. Dieser mäanderförmige Verlauf der Wandungen des Verbindungsteils 40 sorgt für die notwendige axiale Steifigkeit des Verbindungsteils 40 und damit des gesamten Mehrkomponentenzahnrades 10. Der mäanderförmige Verlauf der Wandungen des Verbindungsteils 40 ist durch ein abwechselndes Hin- und Herspringen von Wandungsabschnitten des Verbindungsteils 40 an der ersten und zweiten Hauptfläche 46, 47 charakterisiert, wobei diese Wandungsabschnitte durch die Böden 48a, 49a der Vertiefungen 48, 49 bedingt sind.

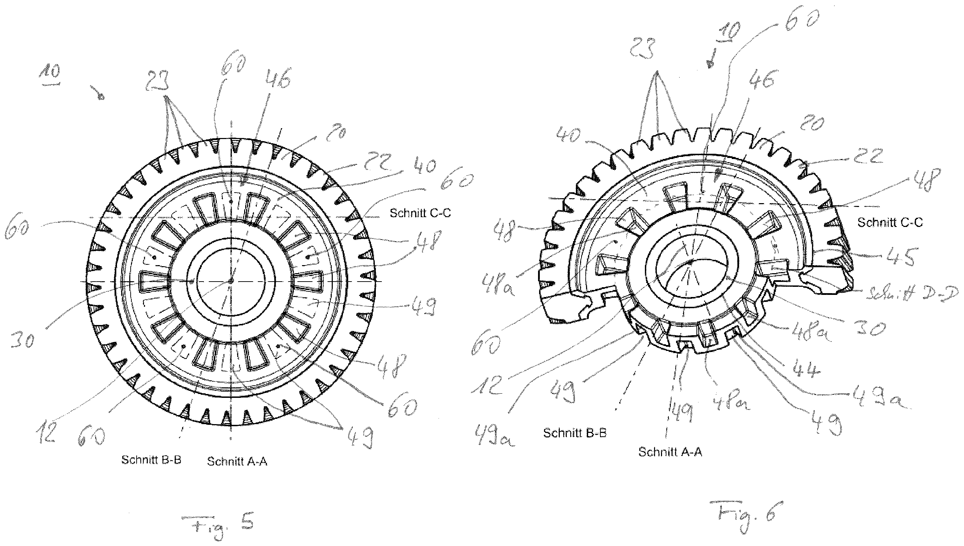

Figur 5 zeigt das Mehrkomponentenzahnrad 10 in Draufsicht und Figur 6 in teilweise gebrochener perspektivischer Darstellung. Die Schnittlinie verläuft dabei entlang eines Schnittes D-D der konzentrisch zur Drehachse 12 des Mehrkomponentenzahnrades 10 geführt ist. Der Radius des Schnittes D-D ist so gewählt, dass er die Vertiefungen 48, 49 schneidet und auf der halben Umfangsfläche des Mehrkomponentenzahnrades 10 wieder zur äußeren Umfangsfläche des Mehrkomponentenzahnrades 10 springt. In der Darstellung von Figur 6 ist besonders gut der mäanderförmige Verlauf des Verbindungsteils 40 zwischen den Vertiefungen 48, 49 auf den beiden Hauptflächen 46, 47 erkennbar. Ebenso gut erkennbar ist, wie das Außenteil 20 mit seiner inneren Umfangsfläche 24 in eine umlaufende Nut der Außenfläche 45 des Verbindungsteils 40 hineinragt.

Wie aus den Schnittdarstellungen in Figur 2, 3 und 4 ersichtlich, weist das Innenteil 30 zwar eine innere Umfangsfläche 34 mit konstantem Durchmesser auf. Die äußere Umfangsfläche 35 verfügt jedoch auf der der ersten Hauptfläche 46 des Verbindungsteils 40 zugewandten Seite über einen ringförmige Ausnehmung 36, in welche ein ringförmiger Vorsprung 41 des Verbindungsteils 40 eingreift. Hierdurch wird eine verbesserte formschlüssige Verbindung zwischen dem Verbindungsteil 40 und dem Innenteil 30 sichergestellt. Zur weiteren Verbesserung der formschlüssigen Verbindung kann die äußere Umfangsfläche 35 des Innenteils 30 auch mit einer geeigneten Verzahnung, Rändelung, Riffelung oder auch Rillen versehen sein, damit das spritzgegossene Material eine vergrößerte Anlagefläche hat. Bei Wahl einer Verzahnungsstruktur kann diese auch globoidförmig gewählt werden.

Es hat sich des Weiteren als günstig erwiesen, die beiden Hauptflächen 46, 47 des Verbindungsteils 40 etwas konkav zu gestalten. Dies ist an den Einbuchtungen in den Schnittdarstellungen links und rechts der Figuren 2 bis 4 zu erkennen Hierdurch gewinnt man zusätzlichen Bauraum seitlich des Mehrkomponentenzahnrades 10 für andere notwendige Komponenten einer elektrischen Ladung, wie zum Beispiel Kugellager oder Sensoren.

Wenngleich in dem dargestellten Ausführungsbeispiel die Vertiefungen 48 auf der ersten Hauptfläche 46 des Verbindungsteils 40 im Vergleich zu den Vertiefungen 49 auf der zweiten Hauptfläche 47 des Verbindungsteils 40 als vorzugsweise radial zueinander versetzt offenbart sind, liegt es selbstverständlich auch im Rahmen der Erfindung, dass die Vertiefungen 48, 49 auf den beiden Hauptflächen 46, 47 nicht nur in Umfangsrichtung zueinander, sondern bezogen auf die Drehachse 12 auch oder nur radial zueinander versetzt sind. Dies bedeutet z. B., dass die Vertiefung 48 radial näher an dem Innenteil 30 liegen und die Vertiefungen 49 in gleicher Umfangsrichtung radial näher an dem Außenteil 20 zwischen den Vertiefungen 48 und dem Außenteil 20 oder umgekehrt. Auch hierdurch kann sichergestellt werden, dass möglichst viel Material des Verbindungsteils 40 an den beiden Außenflächen 46, 47 zur Verfügung steht. Allerdings ist die im Zusammenhang mit den gezeigten Ausführungsbeispielen vorgestellte Anordnung der Vertiefungen 48, 49 die optimalere, weil das Verbindungsteil 40 so deutlich steifer ist. Die Steifigkeit des Verbindungsteils 40 kann noch dadurch verbessert werden, dass das Verbindungsteil 40 aus verstärkter, insbesondere faserverstärktem Kunststoff gebildet ist.

### Bezugszeichenliste

- 10: Zahnrad
- 12: Drehachse
- 20: Außenteil
- 22: Zahnkranz
- 23: Zähne
- 24: Innere Umfangsfläche
- 25: Äußere Umfangsfläche
- 30: Innenteil
- 34: Innere Umfangsfläche
- 35: Äußere Umfangsfläche
- 36: Ringförmige Ausnehmung
- 40: Verbindungsteil
- 41: Ringförmiger Flansch
- 44: Innere Umfangsfläche des Verbindungsteils 40
- 45: Äußere Umfangsfläche des Verbindungsteils 40
- 46: Erste Hauptfläche
- 47: Zweite Hauptfläche
- 48: Vertiefungen in erster Hauptfläche 46
- 48a: Boden
- 49: Vertiefungen in der zweiten Hauptfläche 47
- 49a: Boden
- 60: Anspritzpunkte
- A-A: Schnitt
- B-B: Schnitt
- C-C: Schnitt
- B-B: konzentrischer Schnitt
- B: Breite des Innenteils

## Patentansprüche

1. Mehrkomponentenzahnrad (10) mit folgenden Merkmalen:
- einem Außenteil (20) mit Zahnkranz (22),
- einem Innenteil (30),
- einem Verbindungsteil (40) aus Kunststoff zum formschlüssigen Verbinden des Innenteils (30) und des Außenteils (20), wobei das Außenteil (20) an einer äußeren Umfangsfläche (45) und das Innenteil (30) an einer inneren Umfangsfläche (44) des Verbindungsteils (40) angeordnet ist und das Verbindungsteil (40) zusätzlich an zwei gegenüberliegenden, äußeren und senkrecht zu einer Drehachse (12) liegenden Hauptflächen (46, 47) mit einer Vielzahl von Vertiefungen (48, 49) versehen ist,
**gekennzeichnet durch** folgende Merkmale:
- die Vertiefungen (48) in der ersten Hauptfläche (46) des Verbindungsteils (40) sind im Vergleich zu den Vertiefungen (49) in der zweiten Hauptfläche (47) des Verbindungsteils (40) radial und/oder in Umfangsrichtung zur Drehachse (12) versetzt zueinander angeordnet, derart, dass die Vertiefungen (49) der zweiten Hauptfläche (47) jeweils zwischen den Vertiefungen (48) der ersten Hauptfläche (46) liegen und
- mindestens ein Teil der Vertiefungen (48, 49) auf der ersten Hauptfläche (46) oder der zweiten Hauptfläche (47) erstreckt sich über mehr als die halbe Breite des Verbindungsteils (40) zwischen der ersten Hauptfläche (46) und der zweiten Hauptfläche (47), wobei die Vertiefungen (48, 49) topfförmig jeweils einen Boden (48a, 49a) aufweisend ausgebildet sind.

2. Mehrkomponentenzahnrad (10) nach Anspruch 1,
**dadurch gekennzeichnet, dass** die Vertiefungen (48) auf der ersten Hauptfläche (46) in Bezug auf die Vertiefungen (49) bezogen auf der zweiten Hauptfläche (47) des Verbindungsteils (40) so zueinander angeordnet sind, dass ein parallel zur Drehachse (12) liegender Schnitt (Schnitt C-C) oder ein zur Drehachse (12) konzentrischer Schnitt (Schnitt D-D) durch das Mehrkomponentenzahnrad (10) einen mäanderförmigen oder mindestens annähernd mäanderförmigen Verlauf des Verbindungsteils (40) zeigt.

3. Mehrkomponentenzahnrad (10) nach einem der Ansprüche 1 oder 2, **dadurch gekennzeichnet, dass** das Außenteil (20) aus Kunststoff gebildet ist.

4. Mehrkomponentenzahnrad (10) nach einem der Ansprüche 1 bis 3, **dadurch gekennzeichnet, dass** das Innenteil (30) aus Metall besteht und entweder ein metallischer Ring oder eine metallische Drehwelle ist.

5. Mehrkomponentenzahnrad (10) nach einem der Ansprüche 1 bis 4, **dadurch gekennzeichnet, dass** sowohl die erste Hauptfläche (46) als auch die zweite Hauptfläche (47) mit einer Vielzahl von Vertiefungen (48, 49) versehen sind, welche einreihig zueinander beabstandet auf jeder der beiden Hauptflächen (46, 47) in einem gleichen radialen Abstand zur Drehachse (12) verlaufen.

6. Mehrkomponentenzahnrad (10) nach einem der Ansprüche 1 bis 5, **dadurch gekennzeichnet, dass** das Außenteil (20) eine innere Umfangsfläche (24) mit Rändel- oder Verzahnungsstruktur aufweist.

7. Mehrkomponentenzahnrad (10) nach einem der Ansprüche 1 bis 6, **dadurch gekennzeichnet, dass** das Innenteil (30) zumindest eine dem Verbindungsteil (40) zugewandte ringförmige Ausnehmung (36) aufweist, in welche das Verbindungsteil (40) mit einem ringförmig hervorspringenden Flansch (41) eingreift.

8. Mehrkomponentenzahnrad (10) nach einem der Ansprüche 1 bis 7, **dadurch gekennzeichnet, dass** das Verbindungsteil (40) auf mindestens einer seiner beiden Hauptflächen (45, 46) mehrere Anspritzpunkte (60) aufweist, welche jeweils zwischen zwei der Vertiefungen (48, 49) angeordnet sind.

9. Mehrkomponentenzahnrad (10) nach einem der Ansprüche 1 bis 8, **dadurch gekennzeichnet, dass** sowohl die innere Umfangsfläche (44) als auch äußere Umfangsfläche (45) des Verbindungsteils (40) im Querschnitt gesehen eine Breite (B) aufweist, die der Breite des Mehrkomponentenzahnrades (10) oder mindestens annähernd der Breite des Mehrkomponentenzahnrades (10) entspricht.

10. Mehrkomponentenzahnrad (10) nach einem Ansprüche 1 bis 9, **d adurch gekennzeichnet**, dass sowohl die erste Hauptfläche (46) als auch die zweite Hauptfläche (47) des Verbindungsteils (40) konkav ausgebildet sind.

## Claims

1. Multicomponent gear wheel (10) with the following features:
- an outer part (20) with a toothed rim (22),
- an inner part (30),
- a connecting part (40) made of plastic for form-fit connection of the inner part (30) and outer part (20), wherein the outer part (20) is arranged on an outer peripheral face (45) and the inner part (30) on an inner peripheral face (44) of the connecting part (40), and the connecting part (40) is also provided with a plurality of depressions (48, 49) on two opposing outer main faces (46, 47) lying perpendicular to a rotation axis (12),
**characterized by** the following features:
- the depressions (48) in the first main face (46) of the connecting part (40), in comparison with the depressions (49) in the second main face (47) of the connecting part (40), are arranged offset to each other radially and/or in the circumferential direction relative to the rotation axis (12), such that the depressions (49) of the second main face (47) each lie between the depressions (48) of the first main face (46), and
- at least some of the depressions (48, 49) on the first main face (46) or on the second main face (47) extend over more than half the width of the connecting part (40) between the first main face (46) and the second main face (47), wherein the depressions (48. 49) are configured pot-like and each have a base (48a, 49a).

2. Multicomponent gear wheel (10) according to claim 1, **characterised in that** the depressions (48) on the first main face (46), in relation to the depressions (49) on the second main face (47) of the connecting part (40), are arranged relative to each other such that a section (section C-C) lying parallel to the rotation axis (12), or a section (section D-D) concentric to the rotation axis (12), through the multicomponent gear wheel (10) shows a meander-like or at least approximately meander-like course of the connecting part (40).

3. Multicomponent gear wheel (10) according to one of claims 1 or 2, **characterised in that** the outer part (20) is made of plastic.

4. Multicomponent gear wheel (10) according to any of claims 1 to 3, **characterised in that** the inner part (30) consists of metal and is either a metallic ring or a metallic rotary shaft.

5. Multicomponent gear wheel (10) according to any of claims 1 to 4, **characterised in that** both the first main face (46) and the second main face (47) are provided with a plurality of depressions (48, 49) which are spaced apart from each other and run in a single row on each of the two main faces (46, 47) at a same radial distance from the rotation axis (12).

6. Multicomponent gear wheel (10) according to any of claims 1 to 5, **characterised in that** the outer part (20) has an inner peripheral face (24) with a knurling or toothing structure.

7. Multicomponent gear wheel (10) according to any of claims 1 to 6, **characterised in that** the inner part (30) has at least one annular recess (36) which faces the connecting part (40) and in which the connecting part (40) engages with an annular protruding flange (41).

8. Multicomponent gear wheel (10) according to any of claims 1 to 7, **characterised in that** on at least one of its two main faces (45, 46), the connecting part (40) has several moulded protuberances (60) which are each arranged between two of the depressions (48, 49).

9. Multicomponent gear wheel (10) according to any of claims 1 to 8, **characterised in that** both the inner peripheral face (44) and the outer peripheral face (45) of the connecting part (40), viewed in cross-section, have a width (B) which corresponds to the width of the multicomponent gear wheel (10) or at least approximately to the width of the multicomponent gear wheel (10).

10. Multicomponent gear wheel (10) according to any of claims 1 to 9, **characterised in that** both the first main face (46) and the second main face (47) of the connecting part (40) are formed concave.

## Revendications

1. Roue dentée à plusieurs composants (10) ayant les caractéristiques suivantes :
- une partie extérieure (20) avec une couronne dentée (22),
- une partie intérieure (30),
- une partie de liaison (40) en matière plastique pour relier par une liaison par la forme, la partie intérieure (30) et la partie extérieure (20), la partie extérieure (20) se trouvant sur une surface périphérique extérieure (45) et la partie intérieure (30) sur une surface périphérique intérieure (44) de la pièce de liaison (40) qui comporte en outre deux surfaces principales (46, 47) se faisant face, extérieures et perpendiculaires à l'axe de rotation (12), ces surfaces principales ayant un grand nombre de cavités (48, 49),
**caractérisée par** les caractéristiques suivantes :
- les cavités (48) de la première surface principale (46) de la pièce de liaison (40) sont décalées par comparaison aux cavités (49) de la seconde surface principale (47) de la pièce de liaison (40), selon un décalage radial et/ou périphérique par rapport à l'axe de rotation (12), de façon que les cavités (49) de la seconde surface principale (47) se trouvent chaque fois entre les cavités (48) de la première surface principale (46), et
- au moins une partie des cavités (48, 49) se trouve sur la première surface principale (46) ou la seconde surface principale (47) en s'étendant sur plus de la moitié de la largeur de la pièce de liaison (40) entre la première surface principale (46) et la seconde surface principale (47), les cavités (48, 49) étant en forme de pot, avec chacune un fond (48a, 49a).

2. Roue dentée à composants multiples (10) selon la revendication 1,
**caractérisée en ce que**
les cavités (48) de la première surface principale (46) sont disposées par rapport aux cavités (49) de la seconde surface principale (47) de la pièce de liaison (40) pour qu'une coupe (coupe C-C) parallèle à l'axe de rotation (12) ou une coupe (coupe D-D) concentrique à l'axe de rotation (12) à travers la roue dentée à composants multiples (10) montrent le tracé en forme de méandres ou sensiblement en forme de méandres de la pièce de liaison (40).

3. Roue dentée à composants multiples (10) selon l'une des revendications 1 ou 2,
**caractérisée en ce que**
la partie extérieure (20) est en matière plastique.

4. Roue dentée à composants multiples (10) selon l'une des revendications 1 à 3,
**caractérisée en ce que**
la partie intérieure (30) en métal est un anneau métallique, ou un arbre métallique.

5. Roue dentée à composants multiples (10) selon l'une des revendications 1 à 4,
**caractérisée en ce qu'**
à la fois la première surface principale (46) et la seconde surface principale (47) sont munies d'un ensemble de cavités (48, 49) écartées les unes des autres suivant une rangée sur chacune des deux surfaces principales (46, 47) à la même distance radiale par rapport à l'axe de rotation (12).

6. Roue dentée à composants multiples (10) selon l'une des revendications 1 à 5,
**caractérisée en ce que**
la partie extérieure (20) a une surface périphérique intérieure (24) avec une structure moletée ou dentée.

7. Roue dentée à composants multiples (10) selon l'une des revendications 1 à 6,
**caractérisée en ce que**
la partie intérieure (30) comporte au moins un évidement (36) annulaire tourné vers la pièce de liaison (40) et dans laquelle pénètre la pièce de liaison (40) avec une bride (41) annulaire, venant en saillie.

8. Roue dentée à composants multiples (10) selon l'une des revendications 1 à 7,
**caractérisée en ce que**
la pièce de liaison (40) a plusieurs points d'injection (60) sur au moins une de ces deux surfaces principales (45, 46), et chacun des points se trouve entre deux cavités (48, 49).

9. Roue dentée à composants multiples (10) selon l'une des revendications 1 à 8,
**caractérisée en ce qu'**
à la fois la surface périphérique intérieure (44) et la surface périphérique extérieure (45) de la pièce de liaison (40), en section ont une largeur (B) qui correspond à la largeur de la roue dentée à composants multiples (10) ou au moins sensiblement à la largeur de la roue dentée à composants multiples (10).

10. Roue dentée à composants multiples (10) selon l'une des revendications 1 à 9,
**caractérisée en ce qu'**
à la fois la première surface principale (46) et la seconde surface principale (47) de la pièce de liaison (40) sont concaves.
